# EUROPEAN PATENT APPLICATION

(11) **EP 1 672 651 A1**
(43) Date of publication of application: **21.06.2006**
(21) Application number: 04773452.0
(22) Date of filing: 21.09.2004
(51) Int. Cl.: H01G 9/058, H01G 9/038

(54) **ELECTRODE COMPOSITE BODY, ELECTROLYTE, AND REDOX CAPACITOR**

(30) Priority: 09.10.2003 JP 2003351295
(71) Applicant: KANEKA CORPORATION, Osaka-shi, Osaka 530-8288 (JP)
(72) Inventor: TATEISHI, Kazuyuki, 6750023 (JP); MURAKAMI, Mutsuaki, 5660072 (JP); YAMAGISHI, Hideo, 6100331 (JP); FURUTANI, Hiroyuki, 5691044 (JP); TACHIBANA, Masamitsu, Settsu-shi, Osaka 566-0072 (JP)
(74) Representative: Behnisch, Werner
(86) International application number: PCT/JP2004/014140
(87) International publication number: WO 2005/036573

(57) **Abstract**

An electrode composite body including a conductive polymer film in which the doping and dedoping capacities of the conductive polymer are improved, an electrolyte, and a redox capacitor including those are provided. The object is achieved by the followings: (1) an electrode composite body including a conductive polymer and an electrode for redox capacitors; (2) an electrode composite including a conductive polymer film and an electrode body for redox capacitors; (3) an electrolyte for redox capacitors that contains an ionic liquid as an essential component; (4) a redox capacitor composed of an electrolyte containing an ionic liquid as an essential component and an electrode composite body for redox capacitors; and (5) a composite body in which the anionic component contained in the ionic liquid and is the same component as a part of the dopant of the conductive polymer.

## Description

### Technical Field

The present invention relates to an electrochemical element, i.e., a redox capacitor, using a doping-dedoping reaction of a conductive polymer; a composite body of an electrolyte and an electrode, the composite body containing an ionic liquid and a conductive polymer as essential components; a composite body of an electrolyte and an electrode in an electrochemical storage element using a redox reaction of a conductive polymer; and an electrode composite body and an electrolyte that constitutes the composite body.

### Background Art

Electrochemical elements are elements using electrochemical reactions and include elements used for storing energy, such as a battery, a capacitor, and a fuel cell. In such elements, use of a doping-dedoping reaction of a conductive polymer has been studied from a long time ago. However, the doping-dedoping reaction of the conductive polymer lacks repetition stability, resulting in a problem that the doping does not occur in the course of repeated reactions. Therefore, in reality, electrochemical elements based on such a principle have not been in practical use.

An electric double layer capacitor is an electrochemical element for electric storage that uses an electric double layer capacitance generated at the interface between an electrode and an electrolyte when a voltage is applied. The mechanism of storage by the electric double layer capacitance is advantageous in that faster charge and discharge can be performed, as compared with a secondary battery accompanying an electrochemical reaction, and the repeating lifetime property is also excellent. However, the electric double layer capacitor disadvantageously has an extremely small energy density compared with the secondary battery. Since the electric double layer capacitance is proportional to the surface area of the electrode, an alkali-activated active carbon having a large surface area is generally used as the electrode. However, even when such an active carbon electrode having a large surface area is used, the energy density of the electric double layer capacitor is about 5 Wh/kg. The capacity density thereof is 1/10 or less, as compared with that of the secondary battery.

In view of such a present situation, in order to dramatically improve the capacity density of the electric double layer capacitor, a capacitor using a pseudo-capacitance by a conductive polymer has been proposed. Unlike the electric double layer capacitance, the pseudo-capacitance is accumulated with an electron transfer process (Faraday process) at an electrode interface. In addition, since an electric double layer is formed at the interface in the pseudo-capacitance-generating process, the electric double layer capacitance and the pseudo-capacitance are generated in parallel, resulting in an increase in the capacitance. When a conductive polymer is used, such a pseudo-capacitance is generated by a redox reaction, i.e., a doping-dedoping reaction of the conductive polymer. The pseudo-capacitance generated by the redox reaction is theoretically estimated to be 10⁶ times the electric double layer capacitance. Accordingly, the capacitor using the pseudo-capacitance (referred to as "redox capacitor") has a capacity dramatically higher than the capacity of the conventional electric double layer capacitor using only the electric double layer capacitance.

For example, an electric double layer capacitor including a conductive polymer film is also applied (Japanese Unexamined Patent Application Publication No. 6-104141).

As described above, the electric double layer capacitor (redox capacitor) using the pseudo-capacitance is an element that can exhibit groundbreaking characteristics. However, such an electric double layer capacitor has not been in practical use because of the following two major technical problems.

First, since the conductive polymer is an insulator in a dedoped state, the conductive polymer does not operate as an electrode. Secondly, the repetition stability of the doping-dedoping reaction of the conductive polymer is not satisfactory. To overcome the first problem, a proposed electrode for a storage element composed of a carbon/conductive polymer composite body has a structure in which the surface of the carbon material having a high specific surface area is covered with the conductive polymer (Japanese Unexamined Patent Application Publication No. 2003-109875).

On the other hand, in reality, the unsatisfactory repetition stability of the doping-dedoping reaction of the conductive polymer, which is the second problem, has not fundamentally been solved.

In addition to the above techniques relating to the electrochemical elements, recently, molten salts that are liquid at normal temperatures have been developed and attract attentions. These are referred to as "ionic liquids" and are composed of combinations of a quaternary salt cation such as imidazolium or pyridinium and an appropriate anion (Br⁻, AlCl⁻, BF₄⁻, PF₆⁻, or the like). The ionic liquids, which have features such as nonvolatility, incombustibility, chemical stability, and high ionic conductivity, attract attention as reusable green solvents used for various syntheses and chemical reactions such as a catalytic reaction.

In addition, for example, the possibility as an electrolyte of an aluminum electrolytic capacitor has been studied using an organic acid onium salt (containing mainly an ionic solid and partially an ionic liquid) (Japanese Unexamined Patent Application Publication No. 2003-22938). Studies as an electrolyte of a Li-ion battery and an electrolyte of an electric double layer capacitor have also been performed. The application to the electric double layer capacitor uses a relatively large potential window of ionic liquids. Furthermore, by using an ionic liquid as an electrolytic solution, the electric double layer capacitance can be increased.

### Disclosure of Invention

An object of the present invention is to provide an electrode composite body including a conductive polymer film wherein the repetition stability of the doping-dedoping reaction of the conductive polymer is improved. Another object of the present invention is to provide a composite body of an electrolyte and an electrode that contains a conductive polymer achieving such characteristics. Such a conductive polymer composite body can be not only applied to an electrode material of an electric double layer capacitor using the pseudo-capacitance but also widely applied to a redox capacitor using an oxidation reduction reaction of the conductive polymer. In addition, an electrolyte suitable for the redox capacitor is provided.

### Means for Solving the Problems

1. A first aspect of the present invention is an electrode composite body including a conductive polymer and an electrode for redox capacitors.
2. A second aspect of the present invention is the electrode composite body for redox capacitors according to the first aspect of the present invention, wherein the conductive polymer according to the first aspect of the present invention further contains an ionic liquid.
3. A third aspect of the present invention is an electrode composite body for redox capacitors, wherein the conductive polymer according to the first aspect of the present invention further contains an ionic liquid, and the conductive polymer according to the first aspect of the present invention contains as a dopant the same anion as an anionic component contained in the ionic liquid.
4. A fourth aspect of the present invention is the electrode composite body for redox capacitors according to the first aspect of the present invention, wherein the conductive polymer according to the first aspect of the present invention is prepared by electrolytic polymerization.
5. A fifth aspect of the present invention is the electrode composite body for redox capacitors according to the first aspect of the present invention, wherein the conductive polymer according to the first aspect of the present invention is prepared by electrolytic polymerization in the presence of an ionic liquid.
6. A sixth aspect of the present invention is the electrode composite body for redox capacitors according to the first aspect of the present invention, wherein the conductive polymer according to the first aspect of the present invention is prepared by electrolytic polymerization in the presence of an ionic liquid containing as a component at least one ion selected from sulfonic acid anion (-SO₃⁻), carboxylato (-COO⁻) , and BF₄⁻ .
7. A seventh aspect of the present invention is the electrode composite body for redox capacitors according to the first aspect of the present invention, wherein the conductive polymer according to the first aspect of the present invention is prepared by electrolytic polymerization in the presence of an organic solvent.
8. An eighth aspect of the present invention is the electrode composite body for redox capacitors according to the first aspect of the present invention, wherein the conductive polymer according to any one of the first aspect to the seventh aspect of the present invention is at least one selected from polypyrrole, polythiophene, polyquinone, derivatives of these polymers, and polymers prepared by polymerizing an amino-group-containing aromatic compound.
9. A ninth aspect of the present invention is the electrode composite body for redox capacitors according to the first aspect of the present invention, wherein the conductive polymer according to the first aspect of the present invention is carried on the surface of the electrode according to the first aspect of the present invention. The conductive polymer used in the electrode composite body is preferably carried on the surface of the carbon material.
10. A tenth aspect of the present invention is the electrode composite body for redox capacitors according to the ninth aspect of the present invention, wherein the electrode according to the ninth aspect of the present invention is composed of a carbon material. A carbon material is preferably used for the electrode composite body of the present invention.
11. An eleventh aspect of the present invention is an electrode composite body including a conductive polymer film and an electrode for redox capacitors.
12. A twelfth aspect of the present invention is the electrode composite body for redox capacitors according to the eleventh aspect of the present invention, wherein the thickness of the conductive polymer film according to the eleventh aspect of the present invention in a state of actual use is 0.1 to 1,000 µm.
13. A thirteenth aspect of the present invention is the electrode composite body for redox capacitors according to the eleventh aspect of the present invention, wherein the thickness of the conductive polymer film according to the eleventh aspect of the present invention when the conductive polymer film is dried at 25°C for 48 hours is 0.05 to 500 µm.
14. A fourteenth aspect of the present invention is an electrolyte for redox capacitors containing an ionic liquid as an essential component.
15. A fifteenth aspect of the present invention is a redox capacitor including an electrolyte containing an ionic liquid as an essential component and the electrode composite body for redox capacitors according to any one of the first aspect to the thirteenth aspect of the present invention. The redox capacitor of the present invention preferably contains an ionic liquid as an essential component.
16. A sixteenth aspect of the present invention is the redox capacitor according to the fifteenth aspect of the present invention, wherein the electrolyte essentially containing an ionic liquid according to the fifteenth aspect of the present invention contains sulfonic acid anion (-SO₃⁻), carboxylato (-COO⁻), or BF₄⁻.
17. A seventeenth aspect of the present invention is the redox capacitor according to the fifteenth aspect of the present invention, wherein the electrolyte essentially containing an ionic liquid according to the fifteenth aspect of the present invention further contains an organic solvent. An electrolyte prepared by adding an organic solvent to an ionic liquid is more preferred for redox capacitors.
18. An eighteenth aspect of the present invention is the redox capacitor according to the seventeenth aspect of the present invention, wherein the weight ratio (A)/(B) of the organic solvent (A) to the ionic liquid (B) is 5 or less. In the case of an electrolyte containing an organic solvent, the weight ratio (A)/(B) of the organic solvent (A) to an ionic liquid (B) in the redox capacitor of the present invention is 5 or less, more preferably 0.6 to 1.6, and most preferably 0.8 to 1.2. When the weight ratio exceeds 5, the viscosity of the solution is advantageously decreased, but the concentration of dopant of the ionic liquid is decreased in the vicinity of the conductive polymer, resulting in a tendency that the doping reaction does not smoothly occur.
19. A nineteenth aspect of the present invention is the redox capacitor according to any one of the fifteenth aspect to the eighteenth aspect of the present invention, the redox capacitor including at least an ionic liquid and a conductive polymer that use all or some of oxidation-reduction of an electrode material, charge-and-discharge in the electric double layer, and adsorption and desorption of ions on the surface of an electrode for storing-and-discharging electric energy, wherein a doping-dedoping reaction of the conductive polymer is performed in the ionic liquid solution.
   The redox capacitor of the present invention includes at least an ionic liquid and a conductive polymer that use all or some of oxidation-reduction of an electrode material, charge-and-discharge in the electric double layer, and adsorption and desorption of ions on the surface of an electrode for storing-and-discharging electric energy, wherein a doping-dedoping reaction of the conductive polymer is performed in the ionic liquid solution.
20. A twentieth aspect of the present invention is a composite body of an electrolyte according to claim 14 and an electrode used for the redox capacitor according to any one of the fifteenth aspect to the nineteenth aspect of the present invention that includes at least an ionic liquid and the conductive polymer and that uses the doping-dedoping reaction of the conductive polymer, wherein the anionic component contained in the ionic liquid is the same component as a part of the dopant of the conductive polymer.
21. A twenty-first aspect of the present invention is the composite body according to claim 20, wherein at least one electrode is an electrode prepared by combining a polypyrrole film.

### Best Mode for Carrying Out the Invention

In order to solve the above problem of improving the repetition stability of the doping-dedoping reaction of the conductive polymer, the present inventors have conducted various studies. First, the reason the doping reaction gradually fails to occur while the doping-dedoping reaction is repeatedly performed in an electrolytic solution is that a dedoped dopant is diffused in the electrolytic solution and an effective dopant is not present in the vicinity of the conductive polymer during doping.

Consequently, the present inventors have studied combinations of a conductive polymer and an ionic liquid. When a component that can also serve as a dopant of the conductive polymer is selected as an anionic component contained in the ionic liquid, the dopant can be constantly present in the vicinity of the conductive polymer. On the basis of such a consideration, the present inventors synthesized various ionic liquids and performed experiments of doping-dedoping reaction of a conductive polymer in the ionic liquids. As a result, the present inventors have found that the doping-dedoping reaction of the conductive polymer is significantly stabilized in an ionic liquid compared with a normal solvent, and made the present invention. It is believed that, in such an ionic liquid, the anionic component contained in the ionic liquid is incorporated as a dopant of the conductive polymer while the doping-dedoping reaction is repeated, and an ionic liquid-conductive polymer composite body is formed in which the anionic component contained in the ionic liquid is the same component as a part of the dopant of the conductive polymer. It is believed that the ionic liquid-conductive polymer composite body contributes to the expression of excellent repetition stability of the doping-dedoping reaction.

In other words, the present invention is not an effort for increasing the capacitance of an electric double layer capacitor using a large potential window of ionic liquids, which has been described in the section of background art, but an effort for increasing the capacitance of an electric double layer capacitor using a pseudo-capacitance and for improving the repetition stability of the pseudo-capacitance.

### <Conductive polymer>

The conductive polymer preferably used in the present invention will now be described.

The conductive polymer used in the present invention is not particularly limited. At least one polymer selected from polypyrrole, polythiophene, polyquinone, derivatives of these polymers, and polymers prepared by polymerizing an amino-group-containing aromatic compound is preferably used.

Examples of the derivatives of polythiophene include, but are not limited to, a polythiophene derivative synthesized from 1-4-dioxythiophene monomer and a polythiophene derivative synthesized from 3-methylthiophene monomer. Examples of the derivatives of polyquinone include, but are not limited to, polybenzoquinone derivatives synthesized from a substituted benzoquinone monomer, polynaphthoquinone derivatives synthesized from a substituted naphthoquinone monomer, and polyanthraquinone derivatives synthesized from a substituted anthraquinone monomer.

The amino-group-containing aromatic compounds include various aromatic compounds each having at least one amino group as a substituent at any position of the aromatic ring (examples of the aromatic compound include benzene, naphthalene, anthracene, p-quinone, naphthoquinone, and anthraquinone).

Examples of benzene derivatives having at least one amino group as a substituent at any position of the aromatic ring include, but are not limited to, aniline and diaminobenzene. Examples of naphthalene derivatives having at least one amino group as a substituent at any position of the aromatic rings include, but are not limited to, 1-amino-naphthalene and 1,2-diamino-benzene. Examples of anthracene derivatives having at least one amino group as a substituent at any position of the aromatic rings include, but are not limited to, 1-amino-anthracene and 1,5-diamino-anthracene.

As a method for synthesizing these conductive polymers, electrolytic polymerization or organometallic chemical condensation polymerization is preferably employed, but is not limited thereto.

### <Electrode>

The material of the electrode relating to the present invention is not particularly limited as long as the electrode can be used for a redox capacitor. A substance having a large specific surface area is preferred.

### <Redox capacitor>

The redox capacitor of the present invention refers to a capacitor in which the capacitance of an electric double layer capacitor is increased using the pseudo-capacitance.

The redox capacitor of the present invention refers to a capacitor that uses all or some of oxidation-reduction of the electrode material, charge-and-discharge in the electric double layer, and adsorption-and-desorption of ions on the surface of the electrode for storing and discharging electric energy, and is a type of electrochemical capacitor including a metal oxide electrode type, a reversible redox solution type, an underpotential type, and the like.

Electrochemical capacitors that generally have a capacity density of 120 Wh/kg and an output density of about 20 kw/kg or more at the active material level, and that can perform high-speed charge-and-discharge within a few seconds have been developed.

### <Electrode composite body including conductive polymer and electrode for redox capacitors>

The electrode composite body in the present invention includes a conductive polymer and an electrode.

The form of the electrode composite body is not particularly limited as long as the electrode composite body includes a conductive polymer and an electrode and can be used for redox capacitors. The effect and the operation of the electrode composite body for redox capacitors are to increase the capacitance of an electric double layer capacitor using the pseudo-capacitance derived from the conductive polymer.

### <Ionic liquid >

Ionic liquids preferably used in the present invention will be described.

An ionic liquid refers to a substance that consists of ions but is a liquid at normal temperatures. The ionic liquid is composed of a combination of a cation, such as imidazolium, and an appropriate anion.

Examples of the cation contained in the ionic liquid suitable for the purpose of the present invention include, but are not limited to, imidazolium cation, pyridinium cation, pyrrolidinium cation, ammonium cation, and triazine derivative cations. Among these, imidazolium cation is preferably used as the cation for this purpose in view of the ease of use.

### <Anionic component contained in ionic liquid>

On the other hand, examples of the anionic component contained in the ionic liquid include, but are not limited to, Br⁻, AlCl⁻, PF₆⁻, NO₃⁻, R_{A}NO₃⁻, NH₂CHR_{A}COO⁻, (CF₃SO₂)₂N⁻, and SO₄²⁻.

Here, R_{A} represents a substituent containing an aliphatic hydrocarbon group, an alicyclic hydrocarbon group, an aromatic hydrocarbon group, an ether group, an ester group, an acyl group, or the like and may contain fluorine.

Furthermore, R_{B}COO⁻, ⁻OOCR_{B}COOH, ⁻OOCR_{B}CCOO⁻, and NH₂CHR_{B}COO⁻ (wherein R_{B} represents a substituent containing an aliphatic hydrocarbon group, an alicyclic hydrocarbon group, an aromatic hydrocarbon group, an ether group, an ester group, an acyl group, or the like and may contain fluorine), which are anions each containing carboxylato (-COO⁻), are preferably used for this purpose.

In addition, R_{C}SO₃⁻ and R_{C}OSO₃⁻ (wherein R_{C} represents a substituent containing an aliphatic hydrocarbon group, an alicyclic hydrocarbon group, an aromatic hydrocarbon group, an ether group, an ester group, an acyl group, or the like and may contain fluorine), which are anions each containing sulfonic acid anion (-SO₃⁻), benzenesulfonic acid, toluenesulfonic acid, and the like are preferably used for this purpose.

Furthermore, use of BF₄⁻ provides an ionic liquid having a low viscosity, and thus BF₄⁻ can be preferably used for the purpose of the present invention.

The ionic liquids preferably used in the present invention can be synthesized by combining the above anions and cations by a known method. Specific examples of the method include an anion exchange method, an acid ester method, and a neutralization method.

### <Conductive polymer further containing ionic liquid>

A phrase "a conductive polymer further containing an ionic liquid" refers to an ionic liquid-containing conductive polymer. The ionic liquid-containing conductive polymer may be prepared by impregnating the ionic liquid into the synthesized conductive polymer. Alternatively, the ionic liquid may coexist from the synthetic process of the conductive polymer. Additionally, the cationic component and the anionic component that constitute the ionic liquid may be components that can serve as a dopant of the conductive polymer or components that cannot serve as a dopant of the conductive polymer. Even when the components do not serve as the dopant of the conductive polymer, it is possible to include them in the conductive polymer (to coexist with the conductive polymer).

### <Conductive polymer containing as dopant the same anion as the anionic component contained in ionic liquid>

A phrase "a conductive polymer containing as dopant the same anion as the anionic component contained in an ionic liquid" refers to an ionic liquid-containing conductive polymer whose anionic component contained in the ionic liquid can serve as a dopant of the conductive polymer. Needless to say, the conductive polymer may be prepared by impregnating the ionic liquid into the synthesized conductive polymer or the ionic liquid may coexist from the synthetic process of the conductive polymer.

### <Electrolytic polymerization>

Electrolytic polymerization is a method of dissolving, for example, pyrrole monomer in a solvent with a supporting electrolyte, and performing dehydrogenation polymerization by anodizing. Thus, polypyrrole, which is a conductive polymer, can be precipitated on the anode. In general, since the oxidation-reduction potential of polymers is lower than that of the monomers, the oxidation of the polymer skeleton further proceeds during polymerization process, whereby an anion, which constitutes the supporting electrolyte, is incorporated in the polymer as a dopant. Because of this mechanism, electrolytic polymerization is advantageous in that a conductive polymer can be produced without adding a dopant thereafter. As will be described below, preferably, a carbon electrode is used in electrolytic polymerization and a conductive polymer is precipitated on the surface of the electrode because such an electrode can be used without further treatment as a polarized electrode of an electric double layer capacitor or the like.

Examples of the supporting electrolyte, which includes an anion incorporated in a polymer as a dopant, include sodium alkylsulfonate, sodium p-toluenesulfonate, sodium dodecylbenzenesulfonate, sodium triisopropylnaphthalenesulfonate, sodium benzoate, sodium dodecyl sulfate, n-propyl phosphoric ester, isopropyl phosphoric ester, n-butyl phosphoric ester, n-hexyl phosphoric ester, sodium polystyrene sulfonate, sodium polyvinyl sulfonate, tetra-n-butylammonium perchlorate, and tetra-n-butylammonium tetrafluoroborate.

As described in the present invention, particularly preferably, a part of the dopant of the conductive polymer and the anionic component contained in the ionic liquid are the same component.

### <Electrolytic polymerization in the presence of ionic liquid>

By performing electrolytic polymerization in the presence of an ionic liquid, the ionic liquid coexists from the synthetic process of the conductive polymer. As described above, the cationic component and the anionic component that constitute the ionic liquid may be components that can serve as a dopant of the conductive polymer or components that cannot serve as a dopant of the conductive polymer. Even when the components do not serve as the dopant of the conductive polymer, it is possible to include them in the conductive polymer (to coexist with the conductive polymer).

More preferably, a part of the dopant of the conductive polymer and the anionic component contained in the ionic liquid are the same component. The reason for this is as follows. The dopant relating to the doping-dedoping reaction is incorporated during the synthetic process of the conductive polymer. This incorporation directly increases the pseudo-capacitance when an electric double layer capacitor is formed.

### <Organic solvent>

In the present invention, it is preferred that the conductive polymer is produced by electrolytic polymerization in the presence of an organic solvent. In order to improve the solution viscosity, various types of solvents may be added to the above-described ionic liquids suitable for the present invention. Examples of the solvent that can be used for such a purpose include water, alcohols such as methanol, acetonitrile, propylene carbonate, ethylene carbonate, and γ-butyllactone. Conducting electrolytic polymerization in an organic solvent containing an ionic liquid is preferred from the viewpoint that, as described below, the doping-dedoping reaction quantity of an electrolytic polymerization film is increased.

### <Details about the form of "electrode composite body including conductive polymer and electrode">

As an example of a composite body of an electrolyte and an electrode and an electrochemical element of the present invention, a method for preparing a polarized electrode of an electric double layer capacitor will now be described. It should be understood that the electrode composite body of the present invention is not limited in the production method.

Fundamental structure of the polarized electrode in the present invention is preferably composed of a composite material including a carbon material and a conductive polymer.

### <Carried on the surface of electrode>

A first method for preparing a conductive polymer/carbon composite material electrode is a method in which a conductive polymer and the carbon material, which constitute an electrode material, and a binder are added to an organic solvent such as ethanol, methanol, or methylpyrrolidone to prepare a dispersion liquid, and the dispersion liquid is then applied on the surface of a metal collector followed by drying. As the binder, a fluorocarbon resin such as polytetrafluoroethylene or vinylidene fluoride is preferably used. The amount of the binder used relative to the electrode material is preferably about 5 to 20 weight percent. As the metal collector, a metal such as aluminum, nickel, a stainless steel, titanium, or tantalum is preferably used. Alternatively, the metal collector may be prepared by plating gold or platinum on these metals or by forming a metal layer on a polymer film. The metal collector is more preferably used in the form of a rolled foil, a punching foil, an etched foil, an expanded metal foil, or the like. When the polarized electrode is prepared not in the form of a collector but in the form of a sheet, the conductive polymer/carbon composite material and the binder are mixed and a lubricant is further added to prepare paste. The paste is then formed by extrusion and rolled with a roll to prepare an electrode sheet.

A second method for preparing a conductive polymer/carbon composite material electrode is a method in which a carbon material is dispersed in a polymerization solution of a conductive polymer and chemical polymerization is then conducted, thereby coating the surface of the carbon material with the conductive polymer. A polarized electrode is prepared as in the first method using the conductive polymer-coated carbon material thus prepared.

In a third method for preparing a conductive polymer/carbon composite material electrode, first, a carbon material and a binder are added to an organic solvent such as ethanol, methanol, or methylpyrrolidone to prepare a dispersion liquid, and the dispersion liquid is then applied on the surface of a metal collector followed by drying to prepare a carbon electrode. Subsequently, electrolytic polymerization is performed using the resulting carbon electrode as an electrode so that a conductive polymer thin film is formed on the surface of the carbon electrode. Thus, a structure in which the conductive polymer thinly covers the surface of the carbon material is obtained. This method is advantageous to decrease the impedance because the thickness of the conductive polymer layer of the polarized electrode prepared by the method can be significantly reduced.

### <Carbon material>

Furthermore, the carbon material preferably contains an activated carbon powder and/or a graphite powder. By adding the activated carbon powder and a graphite powder, a decrease in the electrode resistance and an increase in the surface area can be achieved. Accordingly, examples of the particularly preferred carbon material include carbon blacks such as acetylene black and furnace black that have a large surface area; activated carbon particles each having a relatively large pore size; and carbon fibers, graphite fibers, and carbon nanotubes that have relatively small particle sizes. In more detail, a carbon material having a specific surface area of 20 m²/g or more is preferred.

### <Electric double layer capacitor>

As an example, the structure of an electric double layer capacitor including the polarized electrode thus prepared will now be described.

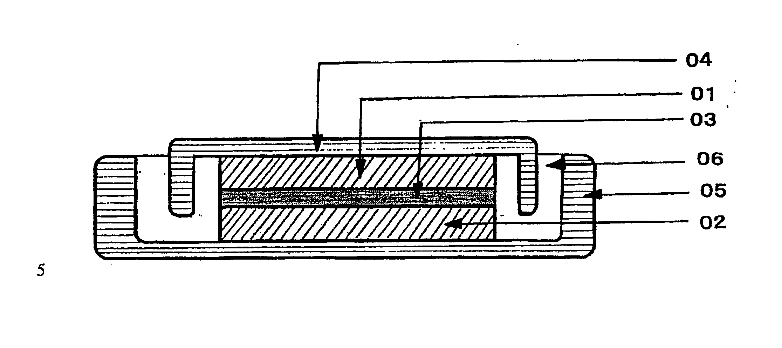

Fig. 1 shows the conceptual structure of an electric double layer capacitor. Reference numerals 01 and 02 respectively indicate a polarized electrode and an electrolytic solution, reference numeral 03 indicates a porous separator, reference numerals 04 and 05 indicate electrode terminals, and reference numeral 06 indicates an electrically insulating gasket. First, conductive polymer/carbon composite body electrodes (referred to as "polarized electrodes") each having a collector are prepared according to the above method and a structure having a three-layer structure composed of electrode/separator/electrode is then prepared. Subsequently, the resulting structure is sealed in a metal case together with an ionic liquid electrolytic solution of the present invention, and the collectors are joined to the electrode terminals of the double layer capacitor.

### <Electrode composite body including conductive polymer film and electrode for redox capacitors>

In the present invention, when the shape of the conductive polymer has a form of a film-shaped "conductive polymer film", an increase in the pseudo-capacitance can be expected. Therefore, this form of conductive polymer film is a preferred embodiment. Accordingly, the electrode composite body in the present invention also refers to a composite body including the "conductive polymer film" and an electrode.

The form of the electrode composite body is not particularly limited as long as the electrode composite body includes a conductive polymer film and an electrode and can be used for redox capacitors. The effect and the operation of the electrode composite body for redox capacitors are to increase the capacitance of an electric double layer capacitor using the pseudo-capacitance derived from the conductive polymer.

### <Thickness of conductive polymer film in a state of actual use>

In the present invention, the term "state of actual use" refers to a state of being usually and actually used as a redox capacitor at 25°C and normal pressure. In other words, the term "thickness in a state of actual use" refers to a thickness of a conductive polymer film obtained by disassembling a capacitor actually used, the thickness being measured at 25°C and normal pressure without further treatment. Accordingly, the thickness means a thickness of a conductive polymer film swollen with an electrolytic solution or the like.

Thus, in a capacitor including a conductive polymer film and an electrode, the capacitor in a state of actual use is disassembled and can be analyzed in terms of the thickness. In addition, the conductive polymer film, the electrode, and the like can be analyzed by, for example, instrumental analysis such as an elemental analysis, an IR measurement, and an NMR measurement. Therefore, needless to say, the electrode composite body for redox capacitors of the present invention can be analyzed.

### <Thickness of conductive polymer film when dried at 25°C for 48 hours>

The term "thickness when dried at 25°C for 48 hours" means a thickness of a conductive polymer film obtained by disassembling a capacitor actually used and drying the film at 25°C for 48 hours. Accordingly, the term represents a thickness of the conductive polymer film that is contracted to some degree as a result of this drying, compared with the thickness of the film swollen with an electrolytic solution or the like during actual use.

Thus, in a capacitor including a conductive polymer film and an electrode, the capacitor in a state of actual use is disassembled and can then be analyzed in terms of the thickness of the conductive polymer film after being dried at 25°C for 48 hours. In addition, the conductive polymer film, the electrode, and the like can be analyzed by, for example, instrumental analysis such as an elemental analysis, an IR measurement, and an NMR measurement. Therefore, needless to say, the electrode composite body for redox capacitors of the present invention can be analyzed.

### <Electrolyte for redox capacitors that contains ionic liquid as essential component>

The ionic liquid of the present invention can be suitably used as an electrolyte for redox capacitors that contains an ionic liquid as an essential component.

The electrolyte for redox capacitors described here refers to an electrolyte composed of, for example, the anionic component contained in the ionic liquids that have been described in the present invention and the cationic component contained in the ionic liquids that have been described in the present invention.

Examples of the cationic component suitable for the purpose of the electrolyte for redox capacitors of the present invention include, but are not limited to, imidazolium cation, pyridinium cation, pyrrolidinium cation, ammonium cation, and triazine derivative cations. Among these, imidazolium cation is preferably used as the cation for this purpose in view of the ease of use.

Examples of the anionic component suitable for the purpose of the electrolyte for redox capacitors include, but are not limited to, Br⁻, AlCl⁻, PF₆⁻, NO₃⁻, R_{A}NO₃⁻, NH₂CHR_{A}COO⁻, (CF₃SO₂)₂N⁻, and SO₄²⁻. Here, R_{A} represents a substituent containing an aliphatic hydrocarbon group, an alicyclic hydrocarbon group, an aromatic hydrocarbon group, an ether group, an ester group, an acyl group, or the like and may contain fluorine.

Furthermore, as the anionic component suitable for the purpose of the electrolyte for redox capacitors, R_{B}COO⁻, ⁻OOCR_{B}COOH, ⁻OOCR_{B}CCOO⁻, and NH₂CHR_{B}COO⁻ (wherein R_{B} represents a substituent containing an aliphatic hydrocarbon group, an alicyclic hydrocarbon group, an aromatic hydrocarbon group, an ether group, an ester group, an acyl group, or the like and may contain fluorine), which are anions each containing carboxylato (-COO⁻), are preferably used for this purpose.

In addition, as the anionic component suitable for the purpose of the electrolyte for redox capacitors, R_{C}SO₃⁻ and R_{C}OSO₃⁻ (wherein R_{C} represents a substituent containing an aliphatic hydrocarbon group, an alicyclic hydrocarbon group, an aromatic hydrocarbon group, an ether group, an ester group, an acyl group, or the like and may contain fluorine), which are anions each containing sulfonic acid anion (-SO₃⁻), benzenesulfonic acid, toluenesulfonic acid, and the like are preferably used for this purpose.

Furthermore, when BF₄⁻ is used as an anion suitable for the purpose of the electrolyte for redox capacitors, an ionic liquid having a low viscosity can be obtained. Thus, the BF₄⁻ can be preferably used for the purpose of the present invention.

In addition, needless to say, the dopant of an electrolyte of the conductive polymer film that has been described in the present invention and an electrolyte such as a supporting electrolyte are included in the electrolyte.

### <Redox capacitor including an electrolyte containing ionic liquid as essential component and electrode composite body>

In the present invention, a redox capacitor including an electrolyte containing an ionic liquid as an essential component and an electrode composite body for redox capacitors of the present invention can be formed.

The redox capacitor preferably contains sulfonic acid anion (-SO₃⁻), carboxylato (-COO⁻), or BF₄⁻ as an ion contained in the ionic liquid.

### <Redox capacitor wherein electrolyte essentially containing ionic liquid further contains organic solvent>

Furthermore, a redox capacitor containing an organic solvent in addition to an ionic liquid is also a preferred embodiment.

Examples of the solvent that can be used for such a purpose include water, alcohols such as methanol, acetonitrile, propylene carbonate, ethylene carbonate, and γ-butyllactone.

A redox capacitor in a system including an ionic liquid and an organic solvent is preferred.

### <Weight ratio of organic solvent (A) to ionic liquid (B) >

In the case of an electrolyte containing an organic solvent, the weight ratio (A)/(B) of the organic solvent (A) to an ionic liquid (B) in the redox capacitor of the present invention is 5 or less, more preferably 0.6 to 1.6, and most preferably 0.8 to 1.2. When the weight ratio exceeds 5, the viscosity of the solution is advantageously decreased, but the concentration of the dopant contained in the ionic liquid is decreased in the vicinity of the conductive polymer, resulting in a tendency that the doping reaction does not smoothly occur.

### <Doping-dedoping reaction >

The dopant of the conductive polymer preferably used in the present invention is selected in consideration of effects of the dopant on the conductivity and the thermal stability of the conductive polymer. Examples of the dopant preferably used in the conductive polymer of the present invention include p-toluenesulfonate ion, benzenesulfonate ion, anthraquinone-2-sulfonate ion, triisopropylnaphthalenesulfonate ion, polyvinyl sulfonate ion, dodecylbenzenesulfonate ion, alkylsulfonate ion, n-propyl phosphate ion, perchlorate ion, and tetrafluoroborate ion. Among these, p-toluenesulfonate, benzenesulfonate, and tetrafluoroborate ions are preferred.

### <Doping-dedoping reaction of conductive polymer in ionic liquid>

A composite body in which the anionic component contained in an ionic liquid and at least a part of the dopant of a conductive polymer are the same component will now be descried.

The anionic component contained in the ionic liquid preferably used in the present invention can also serve as the dopant of the conductive polymer. The gist of the present invention lies in that the doping-dedoping reaction of the conductive polymer is performed in such an ionic liquid. Thereby, when the dedoping reaction of the conductive polymer occurs, the presence of an anion that can serve as an effective dopant for the conductive polymer can be constantly realized in the vicinity of the conductive polymer. On the other hand, in the doping-dedoping reaction of the conductive polymer in a general organic solvent, the dopant produced by dedoping diffuses in the organic solvent and is stabilized, resulting in a difficulty of redoping. Accordingly, when the doping-dedoping reaction is performed in an ionic liquid, and in that case, the anionic component contained in the ionic liquid is selected as a component that can serve as the dopant of the conductive polymer, a significant advantage is provided to the improvement in repetition stability of the doping-dedoping reaction. After the doping-dedoping reaction is repeated at least in the system of the present invention, the dopant of the conductive polymer and a part of the anionic component contained in the ionic liquid form an ionic liquid-conductive polymer composite body, which is a common component. In other words, at the start of the doping-dedoping reaction, the dopant of the conductive polymer and the anionic component contained in the ionic liquid are not necessarily the same. However, after the doping-dedoping reaction proceeds repeatedly, at least a part of the anionic component contained in the ionic liquid is incorporated as a dopant of the conductive polymer and the anionic component contained in the ionic liquid and at least a part of the dopant of the conductive polymer are to be the same. Of course, more preferably, the anionic component and the dopant are selected as the same component using tetrafluoroborate ion (BF₄⁻) or the like from the start.

Further, a redox capacitor is preferably formed in an organic solvent containing an ionic liquid using an electrode composite body composed of an electrolytic polymerization film prepared by electrolytic polymerization in an organic solvent containing an ionic liquid and an electrode. In this case, when the doping-dedoping reaction is performed in the organic solvent containing the ionic liquid and the anionic component contained in the ionic liquid is selected as a component that can serve as the dopant of the conductive polymer, a significant advantage is provided to the improvement in repetition stability of the doping-dedoping reaction.

### <Composite body of electrolyte and electrode>

As described above, the electrode composite body in the present invention refers to a composite body composed of a conductive polymer film and an electrode.

On the other hand, a composite body of an electrolyte and electrodes, which is described in the twentieth aspect of the present invention, is composed of electrodes and an electrolyte. That is, the composite body refers to the entire system including an electrode composite body (a composite electrode according to an embodiment) of an electrode and/or a conductive polymer film, a dopant of the conductive polymer film, electrolytes such as an anionic component and a cationic component that constitute an ionic liquid, and electrolytes such as a supporting electrolyte.

A method for preparing the "composite body of an electrolyte and an electrode" is, for example, as follows.

Namely, the "composite body of an electrolyte and an electrode" is achieved by forming a system including a composite electrode of an electrode and/or a conductive polymer film, a dopant of the conductive polymer film, electrolytes such as an anionic component and a cationic component that constitute an ionic liquid, and electrolytes such as a supporting electrolyte.

For example, the composite body is prepared by combining a composite electrode or a polarized electrode, which is an example of the above-described "electrode composite body including a conductive polymer and an electrode for redox capacitors", and an electrolyte.

### <Composite body of electrolyte and electrodes used for redox capacitors, the composite body including ionic liquid and conductive polymer>

A composite body of an electrolyte and electrodes used for redox capacitors, the composite body including at least an ionic liquid and a conductive polymer, can be preferably used for a redox capacitor in which the doping-dedoping reaction of the conductive polymer is performed in the ionic liquid solution.

### Brief Description of the Drawings

Fig. 1 Fig. 1 is a view showing the conceptual structure of an electric double layer capacitor.
Reference Numerals
01 polarized electrode and electrolytic solution
02 polarized electrode and electrolytic solution
03 porous separator
04 electrode terminal
05 electrode terminal
06 electrically insulating gasket

### Examples

### (Synthesis of ionic liquid)

Synthesis examples of ionic liquids of the present invention will be described.
(1) 1-Ethyl-3-methylimidazolium tetrafluoroborate (abbreviated as ILS-1): A commercial product purchased from Koei Chemical Co., Ltd. was used.
(2) 1-Butyl-3-methylimidazolium tetrafluoroborate (abbreviated as ILS-2): A commercial product purchased from Koei Chemical Co., Ltd. was used.
(3) 1-Ethyl-3-ethylimidazolium p-toluenesulfonate: (abbreviated as ILS-3)
   In a dry round-bottom flask, 4.02 g (41.7 mmol) of N-ethylimidazole and 20 mL of DMF were charged and stirred. Subsequently, 8.35 g (41.7 mmol) of ethyl p-toluenesulfonate was rapidly added to the flask under ice cooling and the mixture was further stirred for 23 hours. The resulting reaction solution was added dropwise to 200 mL of ether cooled with ice. The ether was removed by decantation to recover 8.1 g of a yellow liquid. The yield was 65.5%. The structure of the recovered liquid was identified with a ¹H-NMR spectrum. The resulting imidazolium salt had a glass transition temperature (Tg) of -59.5°C.
   [Spectrum data]: 500 MHz, ¹H-NMR (DMSO-d6)
   σ = 1.35 (triplet, J = 5 Hz, 3H), 2.23 (singlet, 3H), 4.15 (quartet, J = 5 Hz, 2H), 7.06 (doublet, J = 5 Hz, 2H), 7.44 (doublet, J = 5 Hz, 2H), 7.74 (singlet, 2H), and 9.04 (singlet, 3H)
(4) 1-Methyl-3-ethylimidazolium p-toluenesulfonate: (abbreviated as ILS-4)
   In a dry round-bottom flask, 2.30 g (28.0 mmol) of N-methylimidazole and 20 mL of DMF were charged and sufficiently stirred. Subsequently, 5.61 g (28.0 mmol) of ethyl p-toluenesulfonate was rapidly added to the flask under ice cooling and the mixture was further stirred for 23 hours. The resulting reaction solution was added dropwise to 200 mL of ether cooled with ice. The ether was removed by decantation to recover 5.90 g of a yellow liquid. The yield was 74.4%. The structure of the recovered liquid was identified with a ¹H-NMR spectrum. The resulting imidazolium salt had a glass transition temperature (Tg) of -85.7°C.
   [Spectrum data]: 500 MHz, ¹H-NMR (DMSO-d6)
   σ = 1.33 (triplet, J = 5 Hz, 3H), 2.22 (singlet, 3H), 3.77 (singlet, 3H), 4.12 (quartet, J = 5 Hz, 2H), 7.06 (doublet, J = 5Hz, 2H), 7.44 (doublet, J = 5 Hz, 2H), 7.65 (singlet, 2H), 7.72 (singlet, 2H), and 9.08 (singlet, 3H)
(5) N-Ethylimidazolium acetate: (abbreviated as ILS-5)
   In a dry round-bottom flask, 6 mL of 99.7% acetic acid was added to 10 g of N-ethylimidazole. The mixture was stirred for 12 hours while the temperature was kept at 0°C. The resulting reaction product was added dropwise to 1,000 mL of diethyl ether under stirring. The diethyl ether was then distilled off at room temperature. Furthermore, vacuum drying was performed to obtain 15.9 g of N-ethylimidazolium acetate. The glass transition temperature was -51.7°C.

### (Mixed solution of ionic liquid and organic solvent)

Acetonitrile, propylene carbonate, and γ-butyllactone were mixed with the ILS-1 at the following ratios.
·For Example 12: ILS-1 (50 parts by weight) + acetonitrile (50 parts by weight) mixed solution
·For Example 13: ILS-1 (50 parts by weight) + propylene carbonate mixed solution (50 parts by weight)
·For Example 14: ILS-1 (50 parts by weight) + γ-butyllactone (50 parts by weight) mixed solution
·For Example 15: ILS-1 (80 parts by weight) + acetonitrile (20 parts by weight) mixed solution
·For Example 16: ILS-1 (60 parts by weight) + acetonitrile (40 parts by weight) mixed solution
·For Example 17: ILS-1 (40 parts by weight) + acetonitrile (60 parts by weight) mixed solution
·For Example 18: ILS-1 (20 parts by weight) + acetonitrile (80 parts by weight) mixed solution

### (Preparation of electrode)

The preparation of an electrode for a doping-dedoping reaction-using electric double layer capacitor (redox capacitor) according to the present invention will be described.

A mixture containing acetylene black (70 parts by weight), polytetrafluoroethylene (15 parts by weight), a graphite powder (15 parts by weight), tetrabutylammonium tetrafluoborate (50 parts by weight), and methanol (150 parts by weight) was sufficiently kneaded. The acetylene black used had a specific surface area of 40 m²/g and the graphite powder had an average particle diameter of 4 µm and a specific surface area of 20 m²/g. The kneaded mixture was applied on a collector composed of a surface-etched aluminum foil (thickness: 20 µm) so that the kneaded mixture had a thickness of 20 µm and covers the entire collector. Subsequently, heat treatment was performed at 150°C to remove methanol. Thus, an electrode (hereinafter referred to as "carbon electrode 1") was prepared.
(A) Preparation of polypyrrole/carbon composite electrode by electrolytic polymerization (Synthesis in organic solvent)
   The carbon electrode 1 was disposed in an acetonitrile solution containing pyrrole (0.1 M) and tetrabutylammonium tetrafluoborate (0.1 M). Electrolytic polymerization reaction was performed by applying a constant voltage of 1.5 V to the carbon electrode 1 for 50 minutes to form an electrolytic polymerization polypyrrole layer on the carbon electrode 1.
(B) Preparation of polypyrrole/carbon composite electrode by electrolytic polymerization (Synthesis in ionic liquid)
   The carbon electrode 1 was disposed in an ionic liquid containing pyrrole (0.1 M) and tetrabutylammonium tetrafluoborate (0.1 M). Electrolytic polymerization reaction was performed by applying a constant voltage of 1.5 V to the carbon electrode 1 for 50 minutes to form an electrolytic polymerization polypyrrole layer on the carbon electrode 1.

### (Measurement and evaluation of characteristics)

A doping-dedoping reaction of a conductive polymer capacitor was performed to measure the repetition stability. First, charging was performed in the range of 0 to 1.1 V and the capacity of the electrode was then determined by integrating the discharging curve. In order to normalize the resultant capacity, the weight of the composite electrode except for the collector part was measured to calculate the capacity per gram. This charge-discharge reaction was repeatedly performed and the change in the capacity was measured, thereby evaluating the repetition stability. A value in the fifth cycle in which the capacity stabilized was used as an initial capacity and compared with a capacity value after 1,000 cycles. Thus, the repetition stability of the doping-dedoping reaction was evaluated. Tables 1 and 2 show the evaluation results of the characteristics of examples.

### (EXAMPLES 1 to 5)

The charge-discharge reaction was performed in the ionic liquids of ILS-1 to ILS-5 with the conductive polymer/carbon composite electrode prepared by method (A). Table 1 shows the results. The results showed that the charge and discharge reaction, i.e., the repetition stability of the doping-dedoping reaction, in the ionic liquids was very excellent and, particularly in the case of the ILS-1, the results showed a remarkable stability.

### Table 1

### (EXAMPLES 6 to 10)

The charge-discharge reaction was performed in the ionic liquids of ILS-1 to ILS-5 with the conductive polymer/carbon composite electrode prepared by method (B). Table 1 shows the results. According to the results, when the polymerization was performed in an ionic liquid, the amounts of doping and dedoping and the repetition stability were more stable, compared with the case where the polymerization was performed in an acetonitrile solution of tetrabutylammonium tetrafluoroborate (0.1 M). Particularly in the case of the ILS-1, the results showed a remarkable stability.

### (EXAMPLE 11)

As a comparative experiment, the repetition stability of the charge-discharge was studied using an acetonitrile solution of tetrabutylammonium tetrafluoroborate (0.1 M), instead of the ionic liquid, with the composite electrode prepared by method (A). As described above, in order to incorporate the anion serving as a supporting electrolyte in the conductive polymer as a dopant by electrolytic polymerization, the above-described anion is dissolved in a solvent such as water in the form of, for example, a sodium salt, an ester, or an ammonium salt of the anion and electrolytic polymerization is performed in the solution.

The results showed that the capacity of charge and discharge when the acetonitrile solution was used was smaller than the capacity of charge-and-discharge when an ionic liquid was used, and the method of the present invention using the ionic liquid was superior.

### Table 2

### (EXAMPLES 12 to 14)

In the ionic liquid of ILS-1, 50 weight percent of acetonitrile, propylene carbonate, or γ-butyllactone was dissolved, and the charge-discharge reaction was then performed with the conductive polymer/carbon composite electrode prepared by method (B). Table 2 shows the results. The results showed that the capacity of charge- and-discharge could be further improved by dissolving an appropriate organic solvent, preferably acetonitrile, to an ionic liquid.

### (EXAMPLES 15 to 18)

The charge-discharge reaction was performed with the conductive polymer/carbon composite electrode prepared by method (B) while the amount of acetonitrile added as a solvent to the ionic liquid of ILS-1 was varied (ILS-11 to ILS-17). Table 2 shows the results. The results showed that when the ratio of acetonitrile was 20 to 80 parts by weight, the capacity of charge and discharge was higher than that in the case where an ionic liquid was used alone and the capacity of charge-and-discharge was the highest in an amount of 50 parts by weight.

### (EXAMPLES 18 and 19)

The charge-discharge reaction was performed with the conductive polymer/carbon composite electrode prepared by method (B). The amount of acetonitrile added as a solvent to the ionic liquid of ILS-1 was 10 parts by weight or 90 parts by weight. Table 2 shows the results. The results showed that when the amount of the solvent added was excessively small or large, the capacity of charge and discharge tended to decrease.

### (EXAMPLE 20)

A polytetrafluoroethylene porous film separator having a thickness of 25 µm was interposed between two conductive polymer/carbon composite electrodes prepared by method (B). The separator and the electrodes were placed in the case shown in Fig. 1, and the upper and lower electrodes and the collector electrodes were joined. Furthermore, an ionic liquid in which the solute used in Example 12 was dissolved was added, and the case was then sealed with an electrically insulating gasket to prepare an element. In this element, the doping-dedoping reaction was performed as in the examples to measure the repeating reaction. The capacity retention ratio after 1,000 cycles was 93%, and thus the characteristics excellent in repetition stability as in Example 12 could be confirmed.

### Industrial Applicability

According to the present invention, a composite body of an electrolyte and an electrode that has improved repetition stability of the doping-dedoping reaction of a conductive polymer can be achieved. Such a conductive polymer film and electrode composite body can be applied to an electrode material for double layer capacitors using a pseudo-capacitance, and widely applied to redox capacitors using a redox reaction of the conductive polymer.

**Table 1**

| | Preparation of electrode composite body | Measurement of charge-and-discharge reaction | | |
|---|---|---|---|---|
| | Solvent for electrolytic polymerization (Solvent for synthesizing polymer) | Solvent for measuring charge-and-discharge reaction | Capacity density after 10 cycles (F/g) | Capacity retention ratio after 1,000 cycles |
| Example 1 | AN | ILS-1 | 462 | 91% |
| Example 2 | AN | ILS-2 | 453 | 87% |
| Example 3 | AN | ILS-3 | 420 | 84% |
| Example 4 | AN | ILS-4 | 413 | 83% |
| Example 5 | AN | ILS-5 | 385 | 81% |
| Example 6 | ILS-1 | ILS-1 | 498 | 91% |
| Example 7 | ILS-2 | ILS-2 | 485 | 88% |
| Example 8 | ILS-3 | ILS-3 | 463 | 84% |
| Example 9 | ILS-4 | ILS-4 | 440 | 84% |
| Example 10 | ILS-5 | ILS-5 | 405 | 81% |
| Example 11 | AN | AN | 337 | 70% |

| | | | | |
|---|---|---|---|---|
| AN: Acetonitrile | | | | |

**Table 2**

| | Preparation of electrode composite body | Measurement of charge-and-discharge reaction | | | | |
|---|---|---|---|---|---|---|
| | Solvent for electrolytic polymerization (Solvent for synthesizing polymer) | Solvent for measuring charge-and-discharge reaction | | | Measurement result | |
| | | Ionic liquid | Organic solvent added | Ratio of organic solvent added (*) | Capacity density after 10 cycles (F/g) | Capacity retention ratio after 1,000 cycles |
| Example 12 | ILS-1 | ILS-1 | AN | 50 parts by weight | 560 | 94% |
| Example 13 | ILS-1 | ILS-1 | PC | 50 parts by weight | 514 | 92% |
| Example 14 | ILS-1 | ILS-1 | γBL | 50 parts by weight | 508 | 92% |
| Example 15 | ILS-1 | ILS-1 | AN | 20 parts by weight | 504 | 90% |
| Example 16 | ILS-1 | ILS-1 | AN | 40 parts by weight | 523 | 91% |
| Example 17 | ILS-1 | ILS-1 | AN | 60 parts by weight | 529 | 91% |
| Example 18 | ILS-1 | ILS-1 | AN | 80 parts by weight | 508 | 88% |
| Example 19 | ILS-1 | ILS-1 | AN | 10 parts by weight | 465 | 83% |
| Example 20 | ILS-1 | ILS-1 | AN | 90 parts by weight | 455 | 84% |

| | | | | | | |
|---|---|---|---|---|---|---|
| (*) The total amount of the solution was 100 parts by weight. | | | | | | |
| PC: Propylene carbonate | | | | | | |
| γBL: γ-Butyllactone | | | | | | |

## Claims

1. An electrode composite body for redox capacitors, comprising a conductive polymer and an electrode.

2. The electrode composite body for redox capacitors according to claim 1, wherein the conductive polymer according to claim 1 further comprises an ionic liquid.

3. An electrode composite body for redox capacitors, wherein the conductive polymer according to claim 1 further comprises an ionic liquid, and the conductive polymer according to claim 1 comprises as a dopant the same anion as an anionic component contained in the ionic liquid.

4. The electrode composite body for redox capacitors according to claim 1, wherein the conductive polymer according to claim 1 is prepared by electrolytic polymerization.

5. The electrode composite body for redox capacitors according to claim 1, wherein the conductive polymer according to claim 1 is prepared by electrolytic polymerization in the presence of an ionic liquid.

6. The electrode composite body for redox capacitors according to claim 1, wherein the conductive polymer according to claim 1 is prepared by electrolytic polymerization in the presence of an ionic liquid containing as a component at least one ion selected from sulfonic acid anion (-SO₃⁻), carboxylato (-COO⁻), and BF₄-.

7. The electrode composite body for redox capacitors according to claim 1, wherein the conductive polymer according to claim 1 is prepared by electrolytic polymerization in the presence of an organic solvent.

8. The electrode composite body for redox capacitors according to claim 1, wherein the conductive polymer according to any one of claims 1 to 7 is at least one selected from polypyrrole, polythiophene, polyquinone, derivatives of these polymers, and polymers prepared by polymerizing an amino-group-containing aromatic compound.

9. The electrode composite body for redox capacitors according to claim 1, wherein the conductive polymer according to claim 1 is carried on the surface of the electrode according to claim 1.

10. The electrode composite body for redox capacitors according to claim 9, wherein the electrode according to claim 9 comprises a carbon material.

11. An electrode composite body for redox capacitors, comprising a conductive polymer film and an electrode.

12. The electrode composite body for redox capacitors according to claim 11, wherein the thickness of the conductive polymer film according to claim 11 in a state of actual use is 0.1 to 1,000 µm.

13. The electrode composite body for redox capacitors according to claim 11, wherein the thickness of the conductive polymer film according to claim 11 when the conductive polymer film is dried at 25°C for 48 hours is 0.05 to 500 µm.

14. An electrolyte for redox capacitors comprising an ionic liquid as an essential component.

15. A redox capacitor comprising an electrolyte containing an ionic liquid as an essential component and the electrode composite body for redox capacitors according to any one of claims 1 to 13.

16. The redox capacitor according to claim 15, wherein the electrolyte essentially containing an ionic liquid according to claim 15 comprises sulfonic acid anion (-SO₃⁻), carboxylato (-COO⁻), or BF₄⁻.

17. The redox capacitor according to claim 15, wherein the electrolyte essentially containing an ionic liquid according to claim 15 further comprises an organic solvent.

18. The redox capacitor according to claim 17, wherein the weight ratio (A)/(B) of the organic solvent (A) to the ionic liquid (B) is 5 or less.

19. The redox capacitor according to any one of claims 15 to 18, the redox capacitor including at least an ionic liquid and a conductive polymer that use all or some of oxidation-reduction of an electrode material, charge-and-discharge in the electric double layer, and adsorption and desorption of ions on the surface of an electrode for storing-and-discharging electric energy, wherein a doping-dedoping reaction of the conductive polymer is performed in the ionic liquid solution.

20. A composite body of an electrolyte according to claim 14 and electrodes used for the redox capacitor according to any one of claims 15 to 19 that includes at least an ionic liquid and the conductive polymer and that uses the doping-dedoping reaction of the conductive polymer, wherein the anionic component contained in the ionic liquid is the same component as a part of the dopant of the conductive polymer.

21. The composite body according to claim 20, wherein at least one electrode comprises an electrode prepared by combining a polypyrrole film.
